# EUROPEAN PATENT SPECIFICATION

(11) **EP 3 067 012 B1**
(45) Date of publication and mention of the grant of the patent: **24.04.2019**
(21) Application number: 15425017.9
(22) Date of filing: 10.03.2015
(51) Int. Cl.: A61C 13/00, A61C 8/00, A61C 5/00

(54) **METHOD FOR PROVIDING A CUSTOM DENTAL PROSTHESIS, AND CUSTOM DENTAL PROSTHESIS**
VERFAHREN ZUR BEREITSTELLUNG EINER INDIVIDUELL ANGEPASSTEN ZAHNPROTHESE UND INDIVIDUELL ANGEPASSTE ZAHNPROTHESE
PROCÉDÉ POUR LA FOURNITURE D'UNE PROTHÈSE DENTAIRE PERSONNALISÉE ET UNE TELLE PROTHÈSE

(43) Date of publication of application: 14.09.2016
(73) Proprietor: Dispotech S.r.l., 23022 Chiavenna (SO) (IT); A.M.T. SRL, 20144 Milano (IT)
(72) Inventor: Pedretti, Giorgio, 20144 Milano (IT); Mortarotti, Massimo, 23022 Chiavenna (IT)
(74) Representative: Modiano, Micaela Nadia

(56) References cited:
- EP-A1- 2 123 235
- EP-A1- 2 444 028
- EP-A1- 2 818 135
- JP-B2- 3 637 978
- US-A1- 2003 087 217
- US-A1- 2014 315 152

## Description

The present invention relates to a method for providing a custom dental prosthesis on implants, and a related custom dental prosthesis.

The present invention further relates to a method for generating a virtual CAD model of a custom dental prosthesis on implants, the related computer program and the virtual CAD model obtainable by way of the aforementioned method.

Dental prostheses are used to recreate the anatomical and functional structure of a tooth, of a set of teeth or even of an entire dental arch. Such prostheses are usually made of a material of the type of titanium and comprise a cosmetic veneer. Such prostheses thus reproduce not only the aesthetic appearance, but also the function of the natural dentition.

Dental prostheses, whether a single tooth, a set of teeth or a dental arch, can be cemented or screwed in by way of dental implants, which are positioned in advance in the jawbone or mandibular bone.

Screwed-in dental prostheses are nowadays generally preferred to cemented prostheses since they permit the immediate masticatory loading of the prostheses, and they can be easily removed, for replacement or repair.

It is known that the correct positioning of the dental implants in the bone is absolutely critical in order that the prosthesis, which will be screwed into such implants, will be able to withstand the masticatory loads required. In particular, the dental implants should be positioned while scrupulously following the bone anatomy of the alveolar processes, so as to favor their osseointegration. In fact, the greater the length of the dental implant inserted in the bone, which also varies as a function of the direction of the implantation axis with respect to the bone proper, the greater the implantation insertion torque will be, and the greater the primary stability of the dental implant and of the prosthesis screwed into it, and also the possibility of withstanding the masticatory loads.

Such conditions are in fact indispensable for the immediate loading of the dental prosthesis and thus for the functional rehabilitation, and appearance, of the patient as soon as the first hours immediately following surgery.

However, conventional screwed-in dental prostheses are not devoid of drawbacks, among which is the fact that the particular direction and position, in the bone, of the axis of the dental implant onto which the dental prosthesis is to be screwed, is such that the hole that permits the passage of the screw for anchoring the prostheses to the implant often protrudes from the vestibular face of the dental prosthesis, i.e. from the visible and aesthetic surface of the dental prosthesis.

Since the position and the direction of the implantation axis with respect to the bone are of fundamental importance for the primary stability of the dental prosthesis, the aesthetic problem of avoiding the presence of the entry holes of the anchoring screws on the visible and aesthetic surface of the dental prosthesis usually takes second place.

US 2014/0315152 A1 discloses a method for generating a virtual CAD model of a custom dental prosthesis, in which method a starting virtual CAD model is sectioned by a cutting plane.

The aim of the present invention consists of devising a method for providing a dental prosthesis that solves the above technical problem, compensates for the drawbacks and overcomes the limitations of the known art by making it possible to safeguard both the functionality and the appearance of the dental prosthesis.

Within this aim, an object of the present invention is to devise a method that enables the provision of a custom dental prosthesis, which is capable of ensuring the best compromise between functionality and appearance.

Another object of the invention consists in devising a method for providing a custom dental prosthesis which does not modify the usual and established workflow that starts with the diagnosis of the dental situation of the patient and leads to the provision of the dental prosthesis by dental technicians' laboratories and by companies that make dental prostheses, and ends with the surgical implantation of the dental prosthesis by the surgeon and/or the odontologist and/or the dentist.

Another object of the invention consists in devising a method for providing custom dental prostheses as a function of the specific anatomy of the patient.

Another object of the invention consists in devising a method for providing a dental prosthesis which is capable of offering the widest guarantees of reliability and safety in use.

Another object of the invention consists in devising a method for providing a dental prosthesis which is easy to implement and economically competitive when compared to the known art.

This aim and these and other objects which will become better apparent hereinafter are achieved by a method for generating a virtual CAD model of a custom dental prosthesis according to claim 1, by a computer program implementing the aforementioned method, according to claim 7 and by a virtual CAD model obtainable by way of the aforementioned method according to claim 8.

This aim and these and other objects which will become better apparent hereinafter are further achieved by a method for providing a custom dental prosthesis according to claim 9, and by a custom dental prosthesis according to claim 10.

Further characteristics and advantages of the invention will become better apparent from the detailed description of a preferred, but not exclusive, embodiment of a custom dental prosthesis, provided according to the production method presented herein, which is illustrated by way of nonlimiting example with the assistance of the accompanying drawings wherein:
Figure 1 is an exploded perspective view of a custom dental prosthesis, for a single tooth, according to the invention;
Figure 2 is a front elevation view of a portion of a dental arch prosthesis, according to the invention, shown in the anatomical configuration of use;

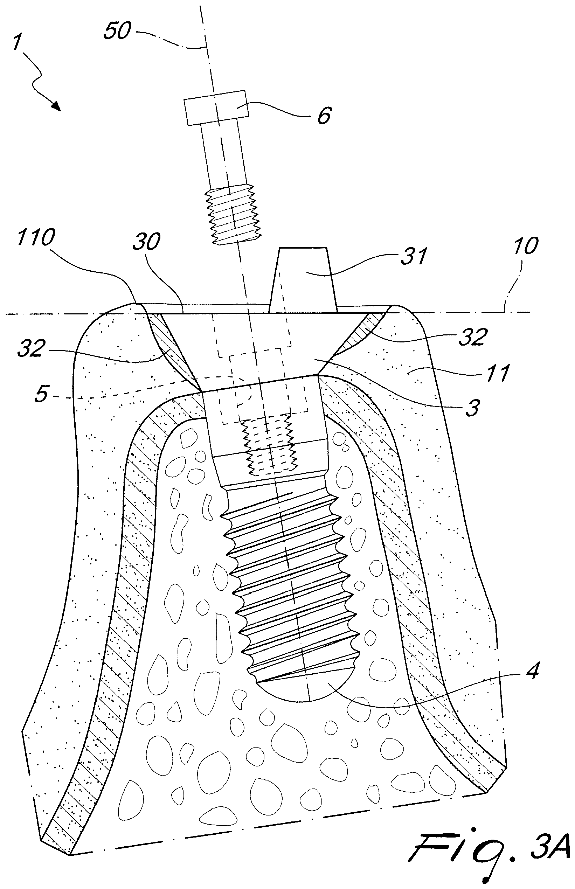

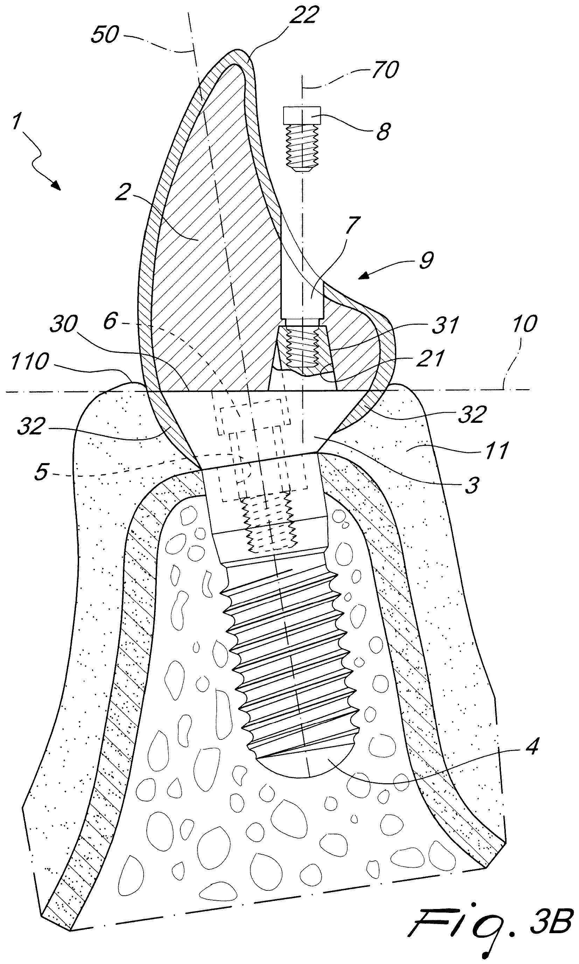

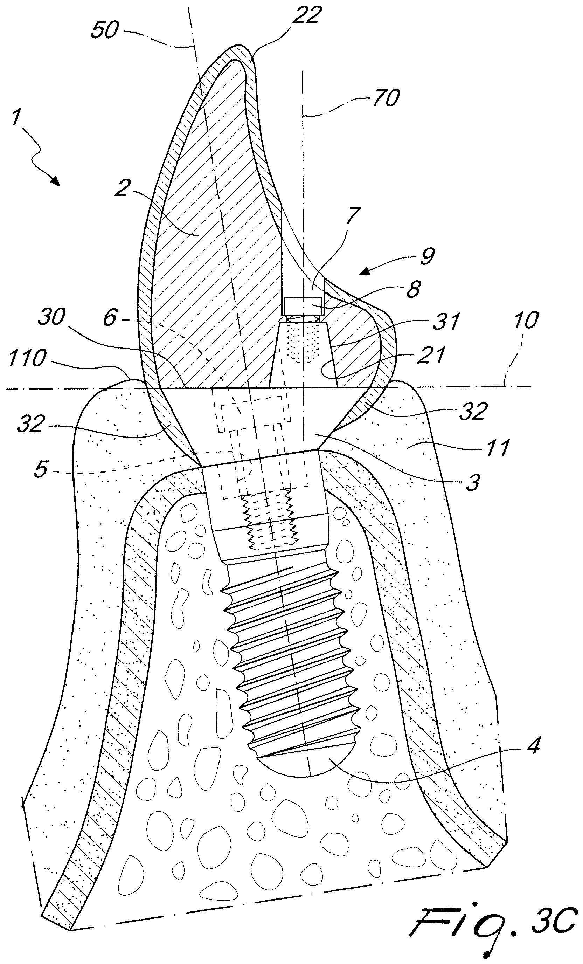

Figures 3a, 3b and 3c are sectional side views of the dental prosthesis in Figure 1, in three successive steps of the method of implantation in the patient;
Figure 4 is a perspective view of a dental arch prosthesis, according to the invention, the components of which are not assembled;
Figure 5 is a perspective view of the prostheses in Figure 4, according to the invention, the components of which are assembled;
Figure 6 is a front elevation view of the prostheses in Figure 5, according to the invention;
Figure 7 is a side view of the prostheses in Figure 5, according to the invention;
Figure 8 is a plan view from above of the prostheses in Figure 5, according to the invention.

The invention relates to a method for providing a custom dental prosthesis, generally designated by the reference numeral 1, which includes a method for generating a virtual CAD model of such custom dental prosthesis 1.

According to the invention, the method for generating a virtual CAD (Computer-Aided Design) model of a dental prosthesis comprises the steps of:
i. having a starting virtual CAD model of a dental prosthesis 1, in which at least one entry implant hole 5 is defined for an implant screw 6 for fixing the prosthesis 1 to a dental implant 4, where the implant hole 5 has a longitudinal extension along an implantation axis 50;
ii. sectioning the starting virtual CAD model of the dental prosthesis 1 by way of at least one cutting plane 10 that is transverse to the implantation axis 50, so as to subdivide the starting virtual CAD model of the prosthesis 1 into a first component, or prosthetic element 2, and into at least one second component, or connecting element 3, producing respectively a virtual CAD model of the prosthetic element 2 and a virtual CAD model of the at least one connecting element 3;
iii. defining, in the virtual CAD model of the prosthetic element 2, at least one entry hole 7 for a screw 8 for fixing the prosthetic element 2 to the at least one connecting element 3, where such hole 7 has a longitudinal extension along a prosthetic axis 70;
iv. selecting in the virtual CAD model of the prosthetic element 2 an angle of inclination of the prosthetic axis 70 with respect to the implantation axis 50 such that the hole 7 is arranged on the inner side 9 of the dental prosthesis 1.

Advantageously, thus, by way of the above mentioned method for generating a virtual CAD model it is possible to subdivide, on the basis of the anatomical/functional and aesthetic requirements, the virtual CAD model of the dental prosthesis 1 into a virtual CAD model of the prosthetic element 2 and into one or more virtual CAD models of the corresponding connecting elements 3, in order to be able to position and orientate the coupling means, for example the hole 7 and the screw 8, between the prosthetic element 2 and the connecting element 3, so as to not have to notch or pierce the outer vestibular surface of the dental prosthesis 1.

The starting virtual CAD model of the custom dental prosthesis 1 is a model that can be obtained according to known standard methods. Such standard methods can for example involve the creation of a morphological resin model of the dental prosthesis, which can be mounted on a plaster model that replicates, by way of analogues, the faithful position of the dental implants inside the mouth of the patient. Such standard methods then involve performing a 3D scan of such morphological resin model, in order to obtain a virtual CAD model thereof which constitutes the starting virtual CAD model of the dental prosthesis that it is desired to produce, by way of CAM (Computer-Aided Manufacturing) techniques, from titanium, chromium-cobalt alloy or another material adapted for biomedical applications.

Advantageously, the method for generating a virtual CAD model of the prostheses 1 comprises the step of selecting, along the implantation axis 50, the height at which the cutting plane 10 passes through the implantation axis 50 so that, in the anatomical configuration of use of the prostheses 1, the connecting element 3 is contained in the soft tissue 11 of the mouth of a patient, i.e. in the gingiva.

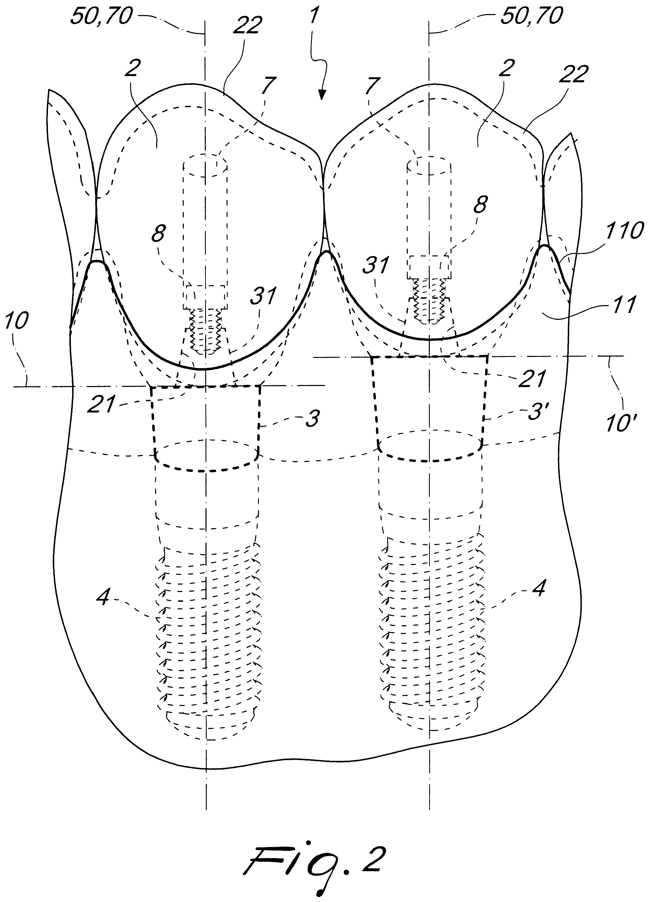

For example, Figure 2 shows the case where the profile of the gingiva 110 has, for two contiguous prosthetic teeth, two different heights with respect to a transverse anatomical plane. In such case, the starting virtual CAD model of the dental prosthesis 1 can be sectioned along two different cutting planes 10, 10', so as to ensure that the two connecting elements 3, 3' produced by the subdivision of the prostheses 1 along the planes 10, 10' do not protrude outside the profile of the gingiva 110. As a consequence, the only portion of the dental prosthesis 1 that is aesthetically visible above the profile of the gingiva 110 can only be the prosthetic element 2.

Advantageously, furthermore, the inclination of the prosthetic axis 70 with respect to the implantation axis 50 can be selected according to any angle that is comprised in a continuous range between 0° and 90°. In this manner it is possible to position the hole 7 so as to avoid it showing on the aesthetic vestibular surface of the prosthetic tooth, by making it possible instead to place it at the lingual or palatal, non visible, surface of the prosthetic tooth.

As illustrated in the accompanying figures, the dental prosthesis 1 can be a single tooth prostheses, or a prostheses of a group of teeth, or bridge, or indeed a prostheses of an entire dental arch.

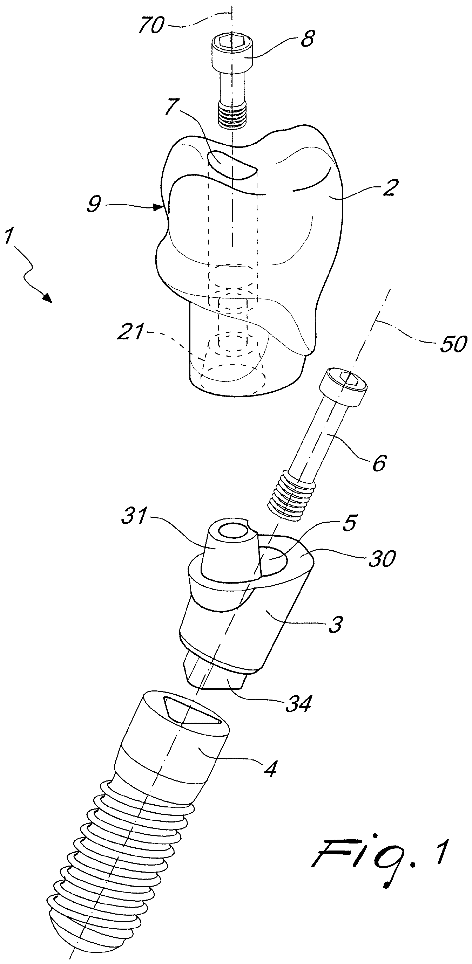

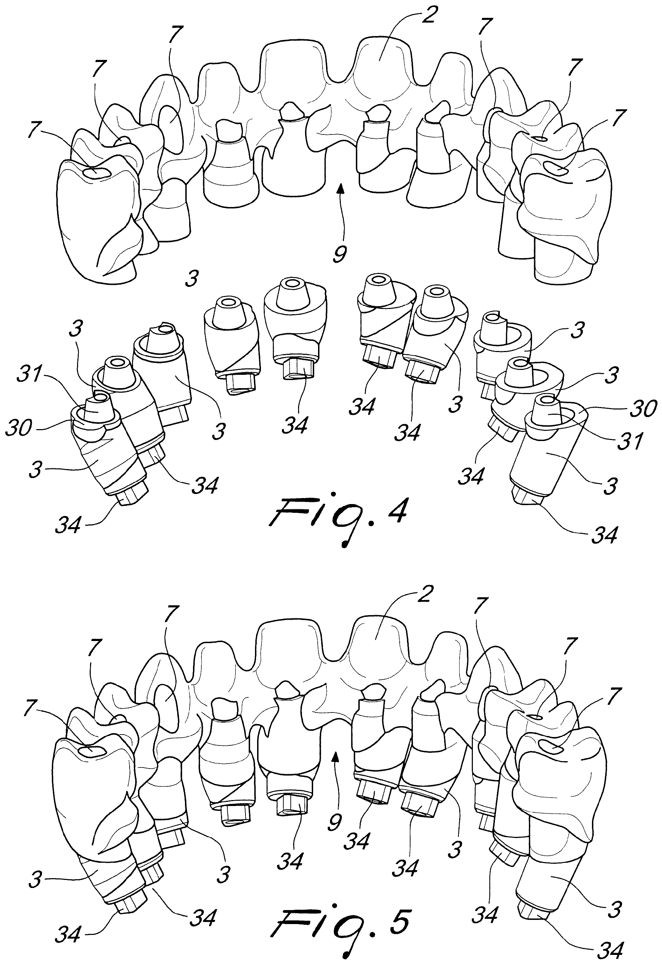

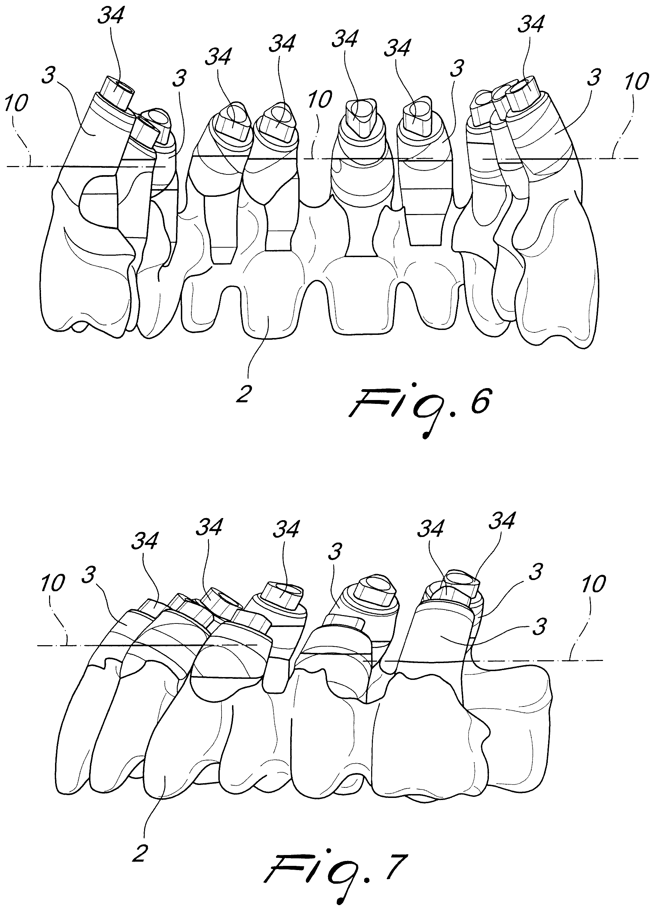

In particular, Figure 1 shows a dental prosthesis 1 of a single tooth, while Figures 4 to 8 show a dental prosthesis of an entire dental arch.

While for a dental prosthesis for a single tooth a single dental implant 4 is usually required, dental prostheses for groups of teeth or for dental arches require a plurality of dental implants 4 for the correct fixing of the prostheses 1 to the jawbone or mandibular bone.

If the dental prosthesis 1 can be associated with a plurality of dental implants 4, in the method for generating a virtual CAD model of the dental prosthesis, the step ii. of sectioning the starting virtual CAD model by way of at least one cutting plane 10 that is transverse to the implantation axis 50 comprises the step of subdividing the starting virtual CAD model of the dental prosthesis 1 into a first component, or prosthetic element 2, and into a plurality of second components, or connecting elements 3, thus generating respectively a virtual CAD model of the prosthetic element 2 and a plurality of virtual CAD models of as many connecting elements 3 as there are dental implants 4.

In this case, the angle of inclination of the prosthetic axis 70 with respect to the implantation axis 50 and/or the height at which the cutting plane 10 passes through the implantation axis 50 can be selected individually for each one of the various connecting elements 3.

In this manner, it is possible to further customize the dental prosthesis 1 by selecting, for each connecting element 3 and thus for each dental implant 4, a certain inclination of the prosthetic axis 70 with respect to the implantation axis 50, as a function both of the specific and particular inclination of the implantation axis 50, and of the necessity of maintaining the hole 7 in the internal, non-aesthetic part 9 of the dental prosthesis 1.

Furthermore, it is also possible to vary, for each connecting element 3 and thus for each dental implant 4, the height at which the cutting plane 10 passes through the implantation axis 50 so that each connecting element 3 is hidden inside the profile of the gingiva 110, optionally also averting a possible gingival recession, which is known to happen with the passing of time.

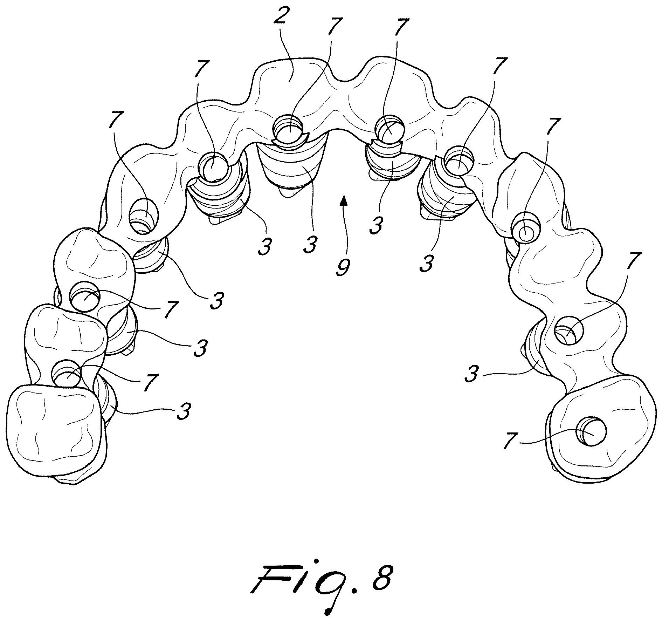

Advantageously, furthermore, it is also possible to arrange the hole 7 so that the corresponding prosthetic axis 70, in the anatomical configuration of use of the dental prosthesis 1, is substantially at right angles to a transverse anatomical plane, as can be inferred from the example dental prosthesis 1 shown in Figure 8, where all the holes 7 for fixing to the connecting elements 3 are substantially at right angles to the transverse anatomical plane.

The present invention also relates to a computer program, stored on an information technology medium, which implements the method for generating a virtual CAD model described above.

The present invention further relates to a virtual CAD model of a custom dental prosthesis 1, obtained by the method for generating a virtual CAD model described above.

As said above, the method for generating a virtual CAD model described above can be comprised in a method for providing a custom dental prosthesis 1, such method comprising, following the steps of the method for generating the virtual CAD model described above, the further steps of:
v. producing, by way of a CAM system, respectively the prosthetic element 2 and the at least one connecting element 3;
vi. associating the prosthetic element 2 to the at least one connecting element 3 by way of the fixing screw 8.

The present invention thus also relates to a custom dental prosthesis 1 obtained by the production method described above.

Advantageously, in such dental prosthesis 1, the connecting element 3 comprises, at the cutting plane 10, a resting surface 30 on which the prosthetic element 2 abuts, once the fixing screw 8 is tightened.

Advantageously, furthermore, the connecting element 3 comprises an anchoring body 31, preferably frustum-shaped, which is configured to be inserted in a corresponding seat 21 defined in the prosthetic element 2. The coupling between the anchoring body 31 and the seat 21 advantageously comprises, in particular for single tooth prostheses 1, rotation-preventing means that prevent the relative rotation between the prosthetic element 2 and the connecting element 3.

For a dental prosthesis 1 for a group of teeth, or for a dental arch, it is likewise possible for the prosthetic element 2 to be directly coupled to one or more of the connecting elements 3 by way of screwing the screw 8 into a threaded hole that is present directly in the resting surface 30 of the connecting element 3, rather than in the anchoring body 31, which in this case is not present in the connecting element 3. Such solution is particularly indicated in cases where the particular dimensions of the prosthetic element 2 and/or of the connecting element 3 do not make it possible to provide the anchoring body 31 in the connecting element 3 and/or the corresponding seat 21 in the prosthetic element 2.

The prosthetic element 2 and the connecting element 3 are preferably made of a material of the type of titanium or chromium-cobalt alloy or any material for biomedical use. The prosthetic element 2 further comprises a cosmetic veneer 22, which can be made of an acrylic material, or of a ceramic material, or indeed of a composite material or in any case of a material that is adapted to biomedical applications.

Advantageously, furthermore, the connecting element 3 can also comprise a cosmetic veneer 32 so as to ensure that, even in the event of any gingival recession 11 and consequent lowering of the profile of the gingiva 110, the portion of the dental prosthesis 1 which may be visible still has a cosmetic veneer.

Advantageously, the connecting element 3 can be associated with the dental implant 4 by way of an anti-rotational connection 34.

Finally, the present invention also relates to a custom dental prosthesis 1 which comprises a prosthetic element 2 and at least one connecting element 3 that can be associated with the prosthetic element 2, where the at least one connecting element 3 can be associated with at least one dental implant 4. According to the invention, the connecting element 3 comprises an entry implant hole 5 for an implant screw 6 for fixing the connecting element 3 to the dental implant 4, where the implant hole 5 has a longitudinal extension along an implantation axis 50. The prosthetic element 2 comprises at least one entry hole 7 for at least one screw 8 for fixing the prosthetic element 2 to the connecting element 3, where the hole 7 has a longitudinal extension along a prosthetic axis 70. The prosthetic axis 70 is inclined with respect to the implantation axis 50 according to any angle that can be selected in a continuous range between 0° and 90° so that the hole 7 of the prosthetic element 2 is arranged on the inner side 9 of the dental prosthesis 1.

In practice it has been found that the method for providing a custom dental prosthesis, according to the present invention, achieves the intended aim and objects in that it makes it possible to obtain a dental prosthesis that achieves the best compromise between functionality and appearance.

Another advantage of the method, according to the invention, consists in that it can obtain dental prostheses that are customized in every minimal detail, capable of adapting perfectly to the profile of the gingiva of the patient.

Another advantage of the method, according to the invention, consists in that it can obtain dental prostheses in which the prosthetic axis can be inclined by any angle with respect to the implantation axis, so that the fixing hole present on the prosthetic element is always arranged at the lingual or palatal level, irrespective of the anatomical restrictions caused by the particular skeletal morphology of the mouth of the patient.

Another advantage of the method, according to the invention, consists in that it is integrated in the normal workflow that leads to the provision and to the implantation of the dental prosthesis.

In particular, the method, according to the invention, does not modify the workflow between the various branches of the profession (dental technicians, companies that make dental prostheses, surgeons) who are involved in the intervention on the patient.

Another advantage of the method, according to the invention, consists in providing a dental prosthesis the emergence profile of which can be hidden below the gingiva.

Another advantage of the method, according to the invention, consists in that the separation of the dental prosthesis into the prosthetic element and into the connecting elements permits easier machining, for example by automatic milling from a solid, or by sintering, or indeed by way of 3D molding techniques, of the prosthetic element, limiting the manual interventions required, for example at the septa between the teeth of the dental prosthesis, which usually require manual milling by a trained technician.

Another advantage of the method, according to the invention, consists in that the individual connecting elements can be associated with identification numbers that thus make it possible to easily identify and reproduce them in the event of substitution.

Another advantage of the method, according to the invention, consists in that the holes for the screws fixing the prosthetic element to the connecting elements can be made with reduced dimensions and arranged in regular positions.

Another advantage of the method, according to the invention, consists in that the holes for the screws fixing the prosthetic element to the connecting elements are arranged in positions and according to orientations that make it possible to use standard fixing screws, and which make the screwing thereof easy, by way of standard screwdrivers.

The method for providing a custom dental prosthesis, and the corresponding method for generating a virtual CAD model of a custom dental prosthesis, thus conceived, are susceptible of numerous modifications and variations, all of which are within the scope of the appended claims.

In practice the materials employed, provided they are compatible with the specific use, and the contingent dimensions and shapes, may be any according to requirements.

## Claims

1. A method for generating a virtual CAD model of a custom dental prosthesis (1), comprising the steps of:
i. having a starting virtual CAD model of said dental prosthesis (1) in which at least one entry implant hole (5) is defined for an implant screw (6) for fixing said dental prosthesis (1) to a dental implant (4), said implant hole (5) having a longitudinal extension along an implantation axis (50);
**characterized in that** if further comprises the steps of:
ii. sectioning said starting virtual CAD model of said dental prosthesis (1) by way of at least one cutting plane (10) that is transverse, but not necessarily perpendicular, to said implantation axis (50) so as to subdivide said starting virtual CAD model of said dental prosthesis (1) into a prosthetic element (2), and into at least one connecting element (3), producing respectively a virtual CAD model of said prosthetic element (2) and a virtual CAD model of said at least one connecting element (3); said cutting plane (10) cutting said virtual CAD model of said dental prosthesis (1) so as to define a prosthetic element (2) with a cosmetic veneer (22) and a connecting element (3) with a cosmetic veneer (32), said cosmetic veneers (22, 32) defining a continuous profile;
iii. defining, in said virtual CAD model of said prosthetic element (2), at least one further entry hole (7) for a further screw (8) for fixing said prosthetic element (2) to said at least one connecting element (3), said at least one further hole (7) having a longitudinal extension along a prosthetic axis (70);
iv. selecting in said virtual CAD model of said prosthetic element (2) an angle of inclination of said prosthetic axis (70) with respect to said implantation axis (50) such that said at least one further hole (7) is arranged on the inner side (9) of said dental prosthesis (1); said at least one further hole being accessible from the outside of said prosthetic component (2).

2. The method for generating a virtual CAD model of a custom dental prosthesis (1) according to claim 1, **characterized in that** it comprises the step of selecting, along said implantation axis (50), the height at which said cutting plane (10) passes through said implantation axis (50) so that, in the anatomical configuration of use of said dental prosthesis (1), said at least one connecting element (3) is contained in the soft tissue (11) of the mouth of a patient.

3. The method for generating a virtual CAD model of a custom dental prosthesis (1) according to claim 1 or 2, **characterized in that** the inclination of said prosthetic axis (70) with respect to said implantation axis (50) can be selected according to any angle that is comprised in a continuous range between 0° and 90°.

4. The method for generating a virtual CAD model of a custom dental prosthesis (1) according to one or more of the preceding claims, **characterized in that** said dental prosthesis (1) is a dental bridge or a dental arch that can be associated with a plurality of dental implants (4), and **in that** said step of sectioning said starting virtual CAD model of said dental prosthesis (1) by way of at least one cutting plane (10) that is transverse, but not necessarily perpendicular, to said implantation axis (50) comprises the step of subdividing said starting virtual CAD model of said dental prosthesis (1) into a prosthetic element (2), and into a plurality of connecting elements (3), thus generating respectively a virtual CAD model of said prosthetic element (2) and a plurality of virtual CAD models of said connecting elements (3) according to the number of said plurality of dental implants (4).

5. The method for generating a virtual CAD model of a custom dental prosthesis (1) according to claim 4, **characterized in that** said angle of inclination of said prosthetic axis (70) with respect to said implantation axis (50) and/or said height at which said cutting plane (10) passes through said implantation axis (50) can be selected individually for each one of said connecting elements (3).

6. The method for generating a virtual CAD model of a custom dental prosthesis (1) according to one or more of the preceding claims, **characterized in that** said prosthetic axis (70), in the anatomical configuration of use of said dental prosthesis (1), is substantially at right angles to a transverse anatomical plane.

7. A computer program, stored on an information technology medium, **characterized in that** it implements the method for generating a virtual CAD model of a custom dental prosthesis (1) according to one or more of claims 1 to 6.

8. A virtual CAD model of a custom dental prosthesis (1), which is obtained by a method for generating a virtual CAD model of a custom dental prosthesis (1) according to one or more of claims 1 to 6.

9. A method for providing a custom dental prosthesis (1), **characterized in that** it comprises a method for generating a virtual CAD model of a custom dental prosthesis (1) according to one or more of claims 1 to 6 and **in that** it comprises the further steps of:
v. producing, by way of a CAM system, respectively said prosthetic element (2) and said at least one connecting element (3);
vi. associating, by way of said screw (8) for fixing said prosthetic element (2) to said at least one connecting element (3), said prosthetic element (2) with said at least one connecting element (3).

10. A custom dental prosthesis (1) obtained by a method for providing a custom dental prosthesis (1) according to claim 9.

11. The custom dental prosthesis (1) according to claim 10, **characterized in that** said connecting element (3) comprises, at said cutting plane (10), a resting surface (30) on which said prosthetic element (2) abuts.

12. The custom dental prosthesis (1) according to claim 10 or 11, **characterized in that** said at least one connecting element (3) comprises an anchoring body (31), which is configured to be inserted in a corresponding seat (21) of said prosthetic element (2).

13. The custom dental prosthesis (1) according to one or more of claims 10 to 12, **characterized in that** said at least one connecting element (3) comprises a cosmetic veneer (32).

14. The custom dental prosthesis (1) according to one or more of claims 10 to 13, **characterized in that** said at least one connecting element (3) can be associated with said dental implant (4) by way of an anti-rotational connection (34).

## Patentansprüche

1. Ein Verfahren zur Erzeugung eines virtuellen CAD-Modells einer individuell angepassten Zahnprothese (1), das folgende Schritte umfasst:
i.das Vorliegen eines virtuellen Ausgangs-CAD-Modells der Zahnprothese (1), in welcher mindestens eine Eintritts-Implantatöffnung (5) für eine Implantatschraube (6) zur Befestigung der Zahnprothese (1) an einem Zahnimplantat (4) bestimmt ist, wobei die Implantatöffnung (5) eine Längsausdehnung entlang einer Implantationsachse (50) hat;
**dadurch gekennzeichnet, dass** es weiter folgende Schritte umfasst:
ii.Unterteilen des virtuellen Ausgangs-CAD-Modells der Zahnprothese (1) durch mindestens eine Schneidebene (10), die transversal, aber nicht notwendigerweise senkrecht, zu der Implantationsachse (50) ist, um das virtuelle Ausgangs-CAD-Modell der Zahnprothese (1) in ein prothetisches Element (2) und mindestens ein Verbindungselement (3) zu unterteilen, wodurch ein virtuelles CAD-Modell des prothetischen Elements (2) beziehungsweise ein virtuelles CAD-Modell des mindestens einen Verbindungselements (3) erzeugt wird; wobei die Schneidebene (10) das virtuelle CAD-Modell der Zahnprothese (1) schneidet, um ein prothetisches Element (2) mit einer kosmetischen Verblendung (22) und ein Verbindungselement (3) mit einer kosmetischen Verblendung (32) zu bestimmen, wobei die kosmetischen Verblendungen (22, 32) ein durchgängiges Profil bestimmen;
iii.Bestimmen, in dem virtuellen CAD-Modell des prothetischen Elements (2), mindestens einer weiteren Eintrittsöffnung (7) für eine weitere Schraube (8) zur Befestigung des prothetischen Elements (2) an dem mindestens einen Verbindungselement (3), wobei die mindestens eine weitere Öffnung (7) eine Längsausdehnung entlang einer Prothesenachse (70) hat;
iv.Auswählen, in dem virtuellen CAD-Modell des prothetischen Elements (2), eines Neigungswinkels der Prothesenachse (70) im Verhältnis zu der Implantationsachse (50), derart, dass die mindestens eine weitere Öffnung (7) sich an der Innenseite (9) der Zahnprothese (1) befindet; wobei die mindestens eine weitere Öffnung von der Außenseite der prothetischen Komponente (2) her zugänglich ist.

2. Das Verfahren zur Erzeugung eines virtuellen CAD-Modells einer individuell angepassten Zahnprothese (1) gemäß Anspruch 1; **dadurch gekennzeichnet, dass** es den Schritt des Auswählens, entlang der Implantationsachse (50), der Höhe umfasst, auf der die Schneidebene (10) durch die Implantationsachse (50) verläuft, so dass, in der anatomischen Nutzungskonfiguration der Zahnprothese (1), das mindestens eine Verbindungselement (3) in den Weichteilen (11) des Mundes eines Patienten untergebracht ist.

3. Das Verfahren zur Erzeugung eines virtuellen CAD-Modells einer individuell angepassten Zahnprothese (1) gemäß Anspruch 1 oder 2; **dadurch gekennzeichnet, dass** die Neigung der Prothesenachse (70) im Verhältnis zu der Implantationsachse (50) in einem beliebigen Winkel gewählt werden kann, der in einem kontinuierlichen Bereich zwischen 0° und 90° liegt.

4. Das Verfahren zur Erzeugung eines virtuellen CAD-Modells einer individuell angepassten Zahnprothese (1) gemäß einem oder mehreren der obigen Ansprüche, **dadurch gekennzeichnet, dass** die Zahnprothese (1) eine Zahnbrücke oder ein Zahnbogen ist, die/der mit einer Vielzahl von Zahnimplantaten (4) verbunden werden kann, und dadurch, dass der Schritt des Unterteilens des virtuellen Ausgangs-CAD-Modells der Zahnprothese (1) durch mindestens eine Schneidebene (10), die transversal, aber nicht notwendigerweise senkrecht, zu der Implantationsachse (50) ist, den Schritt des Unterteilens des virtuellen Ausgangs-CAD-Modells der Zahnprothese (1) in ein prothetisches Element (2) und eine Vielzahl von Verbindungselementen (3) umfasst, wodurch ein virtuelles CAD-Modell des prothetischen Elements (2) beziehungsweise eine Vielzahl virtueller CAD-Modelle der Verbindungselemente (3) entsprechend der Anzahl der Vielzahl von Zahnimplantaten (4) erzeugt wird.

5. Das Verfahren zur Erzeugung eines virtuellen CAD-Modells einer individuell angepassten Zahnprothese (1) gemäß Anspruch 4; **dadurch gekennzeichnet, dass** der Neigungswinkel der Prothesenachse (70) im Verhältnis zu der Implantationsachse (50) und/oder die Höhe, auf welcher die Schneidebene (10) durch die Implantationsachse (50) verläuft, für jedes der Verbindungselemente (3) individuell gewählt werden können.

6. Das Verfahren zur Erzeugung eines virtuellen CAD-Modells einer individuell angepassten Zahnprothese (1) gemäß einem oder mehreren der obigen Ansprüche; **dadurch gekennzeichnet, dass** die Prothesenachse (70) sich in der anatomischen Nutzungskonfiguration der Zahnprothese (1) im Wesentlichen in rechten Winkeln zu einer transversalen anatomischen Ebene befindet.

7. Ein Computerprogramm, gespeichert in einem Informationstechnologiemedium; **dadurch gekennzeichnet, dass** es das Verfahren zur Erzeugung eines virtuellen CAD-Modells einer individuell angepassten Zahnprothese (1) gemäß einem oder mehreren der Ansprüche 1 bis 6 implementiert.

8. Ein virtuelles CAD-Modell einer individuell angepassten Zahnprothese (1), das gewonnen wird durch ein Verfahren zur Erzeugung eines virtuellen CAD-Modells einer individuell angepassten Zahnprothese (1) gemäß einem oder mehreren der Ansprüche 1 bis 6.

9. Ein Verfahren zur Bereitstellung einer individuell angepassten Zahnprothese (1); **dadurch gekennzeichnet, dass** es ein Verfahren zur Erzeugung eines virtuellen CAD-Modells einer individuell angepassten Zahnprothese (1) gemäß einem oder mehreren der Ansprüche 1 bis 6 umfasst, und dadurch, dass es weitere folgende Schritte umfasst:
v.Herstellen, durch ein CAM-System, des prothetischen Elements (2) und entsprechend des mindestens einen Verbindungselements (3);
vi.Verbinden, mit Hilfe der Schraube (8) zur Befestigung des prothetischen Elements (2) an dem mindestens einen Verbindungselement (3), des prothetischen Elements (2) mit dem mindestens einen Verbindungselement (3) .

10. Eine individuell angepasste Zahnprothese (1), hergestellt durch ein Verfahren zur Bereitstellung einer individuell angepassten Zahnprothese (1) gemäß Anspruch 9.

11. Die individuell angepasste Zahnprothese (1) gemäß Anspruch 10, **dadurch gekennzeichnet, dass** das Verbindungselement (3) an der Schneidebene (10) eine Auflagefläche (30) umfasst, an welche das prothetische Element (2) anstößt.

12. Die individuell angepasste Zahnprothese (1) gemäß Anspruch 10 oder 11, **dadurch gekennzeichnet, dass** das mindestens eine Verbindungselement (3) einen Verankerungskörper (31) umfasst, der ausgebildet ist, um in einen entsprechenden Sitz (21) des prothetischen Elements (2) eingesetzt zu werden.

13. Die individuell angepasste Zahnprothese (1) gemäß einem oder mehreren der Ansprüche 10 bis 12, **dadurch gekennzeichnet, dass** das mindestens eine Verbindungselement (3) eine kosmetische Verblendung (32) umfasst.

14. Die individuell angepasste Zahnprothese (1) gemäß einem oder mehreren der Ansprüche 10 bis 13, **dadurch gekennzeichnet, dass** das mindestens eine Verbindungselement (3) mit dem Zahnimplantat (4) durch eine drehfeste Verbindung (34) verbunden werden kann.

## Revendications

1. Procédé pour générer un modèle de CAO (Conception Assistée par Ordinateur) virtuel d'une prothèse dentaire personnalisée (1), comportant l'étape consistant à :
i. disposer d'un modèle de CAO virtuel de départ de ladite prothèse dentaire (1) dans laquelle au moins un trou d'implant d'entrée (5) est défini pour une vis d'implant (6) pour fixer ladite prothèse dentaire (11) à un implant dentaire (4), ledit trou d'implant (5) ayant une extension longitudinale le long d'un axe d'implantation (50),
**caractérisé en ce qu'**il comporte en outre les étapes consistant à :
ii. diviser ledit modèle de CAO virtuel de départ de ladite prothèse dentaire (1) au moyen d'au moins un plan de coupe (10) qui est transversal, mais pas nécessairement perpendiculaire, audit axe d'implantation (50) de manière à subdiviser ledit modèle de CAO virtuel de départ de ladite prothèse dentaire (1) en un élément prothétique (2), et en au moins un élément de liaison (3), en produisant respectivement un modèle de CAO virtuel dudit élément prothétique (2) et un modèle de CAO virtuel dudit au moins un élément de liaison (3), ledit plan de coupe (10) coupant ledit modèle de CAO virtuel de ladite prothèse dentaire (1) de manière à définir un élément prothétique (2) avec un placage cosmétique (22) et un élément de liaison (3) avec un placage cosmétique (32), lesdits placages cosmétiques (22, 32) définissant un profil continu,
iii. définir, dans ledit modèle de CAO virtuel dudit élément prothétique (2), au moins un trou d'entrée supplémentaire (7) pour une vis supplémentaire (8) pour fixer ledit élément prothétique (2) audit au moins un élément de liaison (3), ledit au moins un trou supplémentaire (7) ayant une extension longitudinale le long d'un axe prothétique (70),
iv. sélectionner dans ledit modèle de CAO virtuel dudit élément prothétique (2) un angle d'inclinaison dudit axe prothétique (70) par rapport audit axe d'implantation (50) de telle sorte que ledit au moins un trou supplémentaire (7) est agencé sur le côté intérieur (9) de ladite prothèse dentaire (1), ledit au moins un trou supplémentaire étant accessible depuis l'extérieur dudit élément prothétique (2).

2. Procédé pour générer un modèle de CAO virtuel d'une prothèse dentaire personnalisée (1) selon la revendication 1, **caractérisé en ce qu'**il comporte l'étape consistant à sélectionner, le long dudit axe d'implantation (50), la hauteur à laquelle ledit plan de coupe (10) traverse ledit axe d'implantation (50), de sorte que, dans la configuration anatomique d'utilisation de ladite prothèse dentaire (1), ledit au moins un élément de liaison (3) est contenu dans le tissu mou (11) de la bouche d'un patient.

3. Procédé pour générer un modèle de CAO virtuel d'une prothèse dentaire personnalisée (1) selon la revendication 1 ou 2, **caractérisé en ce que** l'inclinaison dudit axe prothétique (70) par rapport audit axe d'implantation (50) peut être sélectionnée suivant un angle quelconque qui est compris dans une plage continue entre 0° et 90°.

4. Procédé pour générer un modèle de CAO virtuel d'une prothèse dentaire personnalisée (1) selon une ou plusieurs des revendications précédentes, **caractérisé en ce que** ladite prothèse dentaire (1) est un bridge dentaire ou une arcade dentaire qui peut être associé à une pluralité d'implants dentaires (4), et **en ce que** ladite étape de division dudit modèle de CAO virtuel de départ de ladite prothèse dentaire (1) au moyen d'au moins un plan de coupe (10) qui est transversal, mais non nécessairement perpendiculaire, audit axe d'implantation (50) comporte l'étape consistant à subdiviser ledit modèle de CAO virtuel de départ de ladite prothèse dentaire (1) en un élément prothétique (2), et en une pluralité d'éléments de liaison (3), en générant ainsi respectivement un modèle de CAO virtuel dudit élément prothétique (2) et une pluralité de modèles de CAO virtuels desdits éléments de liaison (3) en fonction du nombre d'implants de ladite pluralité d'implants dentaires (4).

5. Procédé pour générer un modèle de CAO virtuel d'une prothèse dentaire personnalisée (1) selon la revendication 4, **caractérisé en ce que** ledit angle d'inclinaison dudit axe prothétique (70) par rapport audit axe d'implantation (50) et/ou ladite hauteur à laquelle ledit plan de coupe (10) traverse ledit axe d'implantation (50) peut être sélectionné individuellement pour chacun desdits éléments de liaison (3).

6. Procédé pour générer un modèle de CAO virtuel d'une prothèse dentaire personnalisée (1) selon une ou plusieurs des revendications précédentes, **caractérisé en ce que** ledit axe prothétique (70), dans la configuration anatomique d'utilisation de ladite prothèse dentaire (1), est sensiblement à angles droits par rapport à un plan anatomique transversal.

7. Programme informatique, stocké sur un support des technologies de l'information, **caractérisé en ce qu'**il met en oeuvre le procédé pour générer un modèle de CAO virtuel d'une prothèse dentaire personnalisée (1) selon une ou plusieurs des revendications 1 à 6.

8. Modèle de CAO virtuel d'une prothèse dentaire personnalisée (1), qui est obtenu par un procédé pour générer un modèle de CAO virtuel d'une prothèse dentaire personnalisée (1) selon une ou plusieurs des revendications 1 à 6.

9. Procédé pour fournir une prothèse dentaire personnalisée (1), caractérisé ce qu'il comporte un procédé pour générer un modèle de CAO virtuel d'une prothèse dentaire personnalisée (1) selon une ou plusieurs des revendications 1 à 6 et en ce qu'il comporte les étapes supplémentaires consistant à :
v. produire, au moyen d'un système de FAO (Fabrication Assistée par Ordinateur), respectivement ledit élément prothétique (2) et ledit au moins un élément de liaison (3),
vi. associer, au moyen de ladite vis (8) pour fixer ledit élément prothétique (2) audit au moins un élément de liaison (3), ledit élément prothétique (2) audit au moins un élément de liaison (3).

10. Prothèse dentaire personnalisée (1) obtenue par un procédé pour fournir une prothèse dentaire personnalisée (1) selon la revendication 9.

11. Prothèse dentaire personnalisée (1) selon la revendication 10, **caractérisée en ce que** ledit élément de liaison (3) comporte, sur ledit plan de coupe (10), une surface d'appui (30) contre laquelle ledit élément prothétique (2) vient en butée.

12. Prothèse dentaire personnalisée (1) selon la revendication 10 ou 11, **caractérisée en ce que** ledit au moins un élément de liaison (3) comporte un corps d'ancrage (31), qui est configuré pour être inséré dans un siège (21) correspondant dudit élément prothétique (2) .

13. Prothèse dentaire personnalisée (1) selon une ou plusieurs des revendications 10 à 12, **caractérisée en ce que** ledit au moins un élément de liaison (3) comporte un placage cosmétique (32).

14. Prothèse dentaire personnalisée (1) selon une ou plusieurs des revendications 10 à 13, **caractérisée en ce que** ledit au moins un élément de liaison (3) peut être associé audit implant dentaire (4) au moyen d'une liaison anti-rotation (34).
